# EUROPÄISCHE PATENTSCHRIFT

(11) **EP 2 323 875 B1**
(45) Veröffentlichungstag und Bekanntmachung des Hinweises auf die Patenterteilung: **11.11.2015**
(21) Anmeldenummer: 09779414.3
(22) Anmeldetag: 06.05.2009
(51) Int. Cl.: B60S 1/24

(54) **SCHEIBENWISCHERANTRIEB**
WINDSHIELD WIPER DRIVE
ENTRAÎNEMENT D'ESSUIE-GLACE

(30) Priorität: 13.08.2008 DE 102008041226
(43) Veröffentlichungstag der Anmeldung: 25.05.2011
(73) Patentinhaber: Robert Bosch GmbH, 70442 Stuttgart (DE)
(72) Erfinder: TRENKLE, Lothar, 77833 Ottersweier (DE)
(86) Internationale Anmeldenummer: PCT/EP2009/055492
(87) Internationale Veröffentlichungsnummer: WO 2010/018012

(56) Entgegenhaltungen:
- EP-A1- 0 669 237
- DE-A1- 4 339 593
- GB-A- 917 908
- US-A- 917 908

## Beschreibung

Die Erfindung betrifft einen Scheibenwischerantrieb sowie eine Scheibenwischereinrichtung mit einem solchen Scheibenwischerantrieb. Insbesondere betrifft die Erfindung einen Scheibenwischerantrieb zur Verwendung in einem Kraftfahrzeug.

Scheibenwischeranlagen in Kraftfahrzeugen umfassen üblicherweise einen elektrischen Antriebsmotor, der mittels eines Kurbelgetriebes einen oder mehrere Wischerarme in eine oszillierende Bewegung versetzt. An jedem Wischerarm ist ein Wischer derart befestigt, dass er, wenn sich der Antriebsmotor dreht, oszillierend über eine Scheibe des Kraftfahrzeugs streicht, um diese zu reinigen.

Es sind im Stand der Technik unterschiedliche Varianten von Kurbelgetrieben bekannt, um die Drehbewegung des Elektromotors in die oszillierende Bewegung der Wischerarme umzusetzen. Üblicherweise ist eine Kurbeleinrichtung auf einer Abtriebswelle des Elektromotors angebracht, und eine mittels eines außermittig auf der Kurbeleinrichtung befestigten Lagers mit der Kurbeleinrichtung verbundene Schubstange richtet die Kreisbewegung des Elektromotors in die oszillierende Bewegung um.

Eine Möglichkeit der Verbindung der Kurbeleinrichtung mit der Abtriebswelle des Elektromotors ist eine Rändelkegelverbindung nach DIN 72783. Bei dieser Verbindung weist ein Wellenende einen Abschnitt mit einem Außengewinde und einen daran anschließenden gerändelten Kegelabschnitt auf. Das Wellenende wird durch eine zum Kegelabschnitt korrespondierende Kegelbohrung in der Kurbeleinrichtung gesteckt und mit einer Sechskantmutter auf dem Außengewinde fest angezogen. In einer montierten Stellung ragt das Wellenende mit der Sechskantmut ter in axialer Richtung über die Kurbeleinrichtung hinaus. Im Betrieb dreht der Elektromotor die Kurbeleinrichtung in einer auf der Abtriebswelle senkrecht stehenden Drehebene. Mittels eines außerhalb der Rotationsachse der Abtriebswelle auf der Kurbeleinrichtung angebrachten Schubstangengelenks (bzw. - lagers) sind eine oder mehrere Schubstangen mit der Kurbeleinrichtung verbunden. Die Schubstangen erstrecken sich im Wesentlichen in einer zur Drehebene der Kurbeleinrichtung parallelen Ebene. Damit die Schubstange beim Drehen der Kurbeleinrichtung über das Wellenende und die Sechskantmutter laufen kann, ist es daher erforderlich, das Schubstangengelenk auf der Kurbeleinrichtung axial bezüglich der Abtriebswelle nach außen zu versetzen. Dies kann beispielsweise durch eine Kröpfung der Kurbeleinrichtung in axialer Richtung bewerkstelligt werden. Verschiedene Ausführungen einer Kurbeleinrichtung und deren Befestigung auf der Abtriebswelle sind in der DE 102 59 956 A1 gezeigt. Eine weitere Variante kann der DE 198 04 954 A1 entnommen werden.

GB 917 908 A betrifft eine Befestigung eines Wischerarms an einer Wischerwelle mittels einer Rändelkegelverbindung.

EP 0 669 237 betrifft eine allgemeine Verbindung zwischen einem Hebel und einer Welle.

Ein gattungsgemässer Scheibenwischerantrieb ist aus dem Dokument DE-A-4339593 bekannt.

Der Erfindung liegt die Aufgabe zu Grunde, einen Scheibenwischerantrieb anzugeben, der in axialer Richtung flach baut.

### Vorteile der Erfindung

Der erfindungsgemäße Scheibenwischerantrieb mit den Merkmalen des Anspruchs 1 hat insbesondere den Vorteil, in einer axialen Richtung einer Abtriebswelle des Elektromotors flach zu bauen und dabei leicht und kostengünstig hergestellt und montiert werden zu können.

In einer Ausführungsform ist ein Schubstangengelenk an der Kurbeleinrichtung befestigt, das eine Schubstange anlenkt, welche ihrerseits mit einem Wischerarm verbunden ist. Dabei erstreckt sich die Schubstange während eines Betriebs des Elektromotors im Wesentlichen in einer Ebene, die auf der Abtriebswelle senkrecht steht. Die erfindungsgemäße, flach bauende Befestigung der Kurbeleinrichtung auf der Abtriebswelle kann es unnötig machen, das Schubstangengelenk in einer axialen Richtung der Abtriebswelle nach Außen zu versetzen, um zu verhindern, dass die Schubstange im Betrieb mit dem Ende der Abtriebswelle oder mit einem damit verbundenen Befestigungsmittel kollidiert. Auf diese Weise können Einbauraum und Produktionskosten eingespart werden; in manchen Fällen kann auch eine Montierbarkeit und Servicefreundlichkeit der Anordnung positiv beeinflusst werden.

Die Erfindung ist beispielsweise anwendbar für eine Kurbel oder für ein Kurbelgetriebe in einer Scheibenwischeranlage. Die Scheibenwischeranlage kann beispielsweise zur Reinigung einer Windschutzscheibe, einer Heckscheibe oder eines Scheinwerfers des Kraftfahrzeugs vorgesehen sein.

Durch die in den Unteransprüchen aufgeführten Maßnahmen ergeben sich vorteilhafte Weiterbildungen und Verbesserungen der im Hauptanspruch angegebenen Merkmale.

In einer bevorzugten Ausführungsform weist eine Abtriebswelle des Elektromotors ein stumpfes (d. h. im Wesentlichen flaches) Wellenende auf, das mit einem ebenen Boden des Sackloches zusammenwirkt, um die axiale Position der Kurbeleinrichtung auf der Abtriebswelle zu definieren. Der Boden des Sackloches liegt dabei in einer senkrecht auf der Abtriebswelle stehenden Ebene. Die Ausnehmung in der Kurbeleinrichtung kann ein Durchgangsloch im Bereich des Absatzes aufweisen.

Durch das Durchgangsloch der Kurbeleinrichtung hindurch kann sich eine Befestigungsschraube mit einem Außengewinde in ein mit einem Innengewinde versehenes koaxiales Loch in der Abtriebswelle erstrecken.

In einer weiteren Ausführungsform kann die Kurbeleinrichtung eines oder mehrere nicht koaxial zur Abtriebswelle verlaufende Durchgangslöcher aufweisen, die mit Löchern in der Abtriebswelle korrespondieren. Wie oben beschrieben können Be festigungsschrauben vorgesehen sein, um die Kurbeleinrichtung an der Abtriebswelle zu befestigen. Alternativ dazu können auch andere, bekannte Befestigungsmittel verwendet werden, beispielsweise Nieten oder Passstifte.

Bevorzugterweise ist die Schraube eine Flachkopfschraube, beispielsweise mit einer stirnseitigen Betätigung, wie z.B. Inbus, Innen-Torx oder Stirnlöchern, oder einer radialen Betätigung, wie beispielsweise einem Mehrkant-Kopf, etwa einem Außen-Torx oder einem Sechskant-Kopf.

Die Schraube kann auch dazu verwendet werden, die Kurbeleinrichtung während einer Montage auf die Abtriebswelle aufzuziehen bzw. aufzupressen. Bei einer solchen Montage kann von einer Wand des Sacklochs oder von der Abtriebswelle ein Span abgeschält werden, der sich am den Boden des Sacklochs so zwischen die Kurbeleinrichtung und die Abtriebswelle legen kann, dass sowohl die axiale Position der Kurbeleinrichtung auf der Abtriebswelle als auch die Ausrichtung der Kurbeleinrichtung senkrecht zur Abtriebswelle beeinträchtigt ist.

Daher weist die Kurbeleinrichtung in einem Bereich des Absatzes, der durch die Wandung und den Boden des Sacklochs begrenzt ist, einen umlaufenden Spanraum zur Aufnahme eines solchen Spans auf. Der Spanraum ist erfindungsgemäss durch eine Sicke oder Vertiefung in axialer Richtung in der Kurbeleinrichtung ausgebildet. Weiter kann der Spanraum durch eine Fase am Ende der Abtriebswelle vergrößert oder gebildet werden. Ist die Fase an der Abtriebswelle ausreichend dimensioniert, kann auf den Spanraum am Absatz verzichtet werden.

Ein zwischen der Abtriebswelle und der Kurbeleinrichtung zu übertragendes Drehmoment kann teilweise über eine radiale Kontaktfläche der Welle mit der Wandung des Sacklochs übertragen werden. Zusätzlich oder alternativ dazu kann ein Teil des Drehmoments zwischen einer Stirnseite des Wellenendes der Abtriebswelle und dem Boden des Sacklochs übertragen werden.

Zur Verbesserung eines Reibungskoeffizienten zwischen der Abtriebswelle und der Kurbeleinrichtung ist es vorgesehen, dass eines oder beide Elemente im Bereich eines gegenseitigen Eingriffs strukturiert sind. Eine Strukturierung ist in Form eines Rändels ausgeführt, beispielsweise in Form eines Zylinderrändels oder eines schräg verlaufenden Rändels. Das Rändel kann in den üblichen, bekannten Variationen ausgeführt sein, beispielsweise als Linksrändel, Rechtsrändel, Links-RechtsRändel oder auch als Kreuzrändel, jeweils mit erhöhten oder vertieften Spitzen.

Im Bereich des Eingriffs zwischen der Kurbeleinrichtung und der Abtriebswelle kann ein größter Außendurchmesser der Abtriebswelle größer als ein kleinster Innendurchmesser der Kurbeleinrichtung sein. Eine solche Konstellation ist beispielsweise bei Einsatz einer Passung oder einer Schrumpfverbindung, aber auch bei Verwendung einer Strukturierung auf der Abtriebswelle und/oder der Kurbeleinrichtung üblich. Im letztgenannten Fall können die Durchmesser so aufeinander abgestimmt sein, dass sich die Strukturierungen, nämlich Rändelgänge, des einen Elements beim Aufziehen bzw. Aufpressen in ein Material des anderen Elements eingraben und so eine drehmomentschlüssige Verbindung erzeugen. Bei einem solchen Eingraben ist ein Abschälen eines Spans im Eingriffsbereich der beiden Elemente wahrscheinlich. Weitere Faktoren können die Spanbildung begünstigen, beispielsweise eine Materialpaarung oder wiederholtes Montieren und Demontieren der Kurbeleinrichtung auf der Abtriebswelle. Aus diesem Grund ist ein Vorsehen eines Spanraums insbesondere in Verbindung mit einer Strukturierung der Abtriebswelle und/oder der Kurbeleinrichtung besonders vorteilhaft.

In einer nicht beanspruchten Ausführungsform entspricht ein Außendurchmesser der Abtriebswelle in einem strukturierten Bereich einem Außendurchmesser der Abtriebswelle in einem angrenzenden, nicht strukturierten Bereich. Dies kann z.B. durch gemeinsames Überschleifen von Welle und strukturiertem Bereich sichergestellt werden.

Nach einem weiteren Aspekt der Erfindung umfasst eine Scheibenwischereinrichtung für ein Fahrzeug, insbesondere für ein Kraftfahrzeug, den oben beschriebenen Scheibenwischerantrieb.

### Zeichnungen

Ausführungsbeispiele der Erfindung sind in den Zeichnungen dargestellt und in der nachfolgenden Beschreibung näher erläutert. Es zeigen:
Fig. 1 eine im Stand der Technik bekannte Rändelkegelverbindung einer Abtriebswelle mit einer Kurbeleinrichtung eines Scheibenwischerantriebs;
Fig. 2 einen Längsschnitt durch die Rändelkegelverbindung aus Fig. 1;
Fig. 3 einen erfindungsgemäßen Scheibenwischerantrieb in einer perspektivischen Ansicht; und
Fig. 4 den Scheibenwischerantrieb aus Fig. 3 in einem Längsschnitt.

Identische bzw. einander entsprechende Elemente tragen in allen Figuren gleiche Bezugszeichen.

### Beschreibung bevorzugter Ausführungsbeispiele

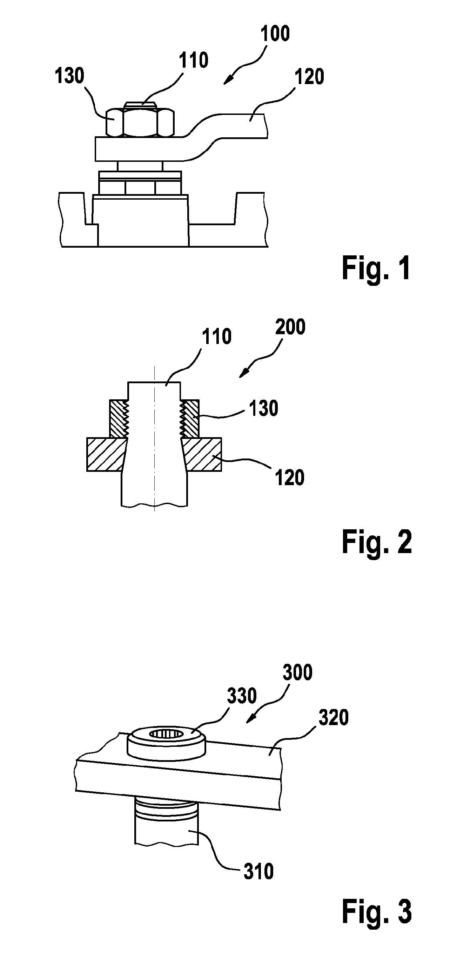

Fig. 1 zeigt einen Scheibenwischerantrieb 100 des Standes der Technik, der eine Abtriebswelle 110, eine Kurbeleinrichtung 120 und eine Sicherungsmutter 130 umfasst. Der im unteren Bereich von Fig. 1 dargestellte Abschnitt eines Motorgehäuses ist in diesem Zusammenhang nicht von Belang.

Deutlich zu erkennen ist die gekröpfte Ausführung der Kurbeleinrichtung 120. Durch die Kröpfung wird sichergestellt, dass ein an einer Oberseite der Kurbeleinrichtung 120 angebrachtes Schubstangengelenk (nicht gezeigt) in axialer Richtung hoch genug liegt, so dass eine am Schubstangengelenk befestigte Schubstange (nicht gezeigt) weder mit der Sicherungsmutter 130 noch mit der Welle 110 kollidiert, wenn sich die Abtriebswelle 110 dreht.

Fig. 2 zeigt einen Längsschnitt 200 eines oberen Abschnitts des Scheibenwischerantriebs aus Fig. 1. Von der Kurbeleinrichtung 120 ist hier nur ein ungekröpfter Abschnitt dargestellt. Es ist zu erkennen, wie die Sicherungsmutter 130 dazu verwendet werden kann, die Kurbeleinrichtung 120 in Fig. 2 nach unten auf der Welle 110 zu pressen, um einen kegeligen Abschnitt der Welle 110 mit einer dazu korrespondierenden kegeligen Aufnahme der Kurbeleinrichtung 120 drehmomentschlüssig zu verbinden. Nicht in Fig. 2 dargestellt ist eine Rändelkegelverbindung entlang der Kegelflächen der Welle 110 und der Kurbeleinrichtung 120.

Fig. 3 zeigt einen erfindungsgemäßen Scheibenwischerantrieb 300 in einer seitlich erhöhten Ansicht. Auf einer Abtriebswelle 310 eines Elektromotors ist eine Kurbeleinrichtung 320 mittels einer Flachkopfschraube 330 angebracht. In einem Vergleich der Anordnung mit denen der Fign. 1 und 2 lässt sich erkennen, dass die Flachkopfschraube 330 signifikant weniger Bauraum in axialer Richtung erfordert als die korrespondierende Sicherungsmutter 130 des Scheibenwischerantriebs des Standes der Technik nach den Figuren 1 und 2. Dementsprechend ist die Kurbeleinrichtung 320 flach ausgebildet, erstreckt sich also im Wesentlichen in einer senkrecht zur Abtriebswelle verlaufenden Drehebene, statt eine Kröpfung aufzuweisen. Mit dem dargestellten flach bauenden Scheibenwischerantrieb 300 kann eine Schubstange (nicht dargestellt) mittels eines Schubstangengelenks (nicht dargestellt) auf der ungekröpften Kurbeleinrichtung 120 angelenkt werden, ohne dass die Schubstange mit der Flachkopfschraube 330 kollidiert, wenn sich die Abtriebswelle 310 dreht.

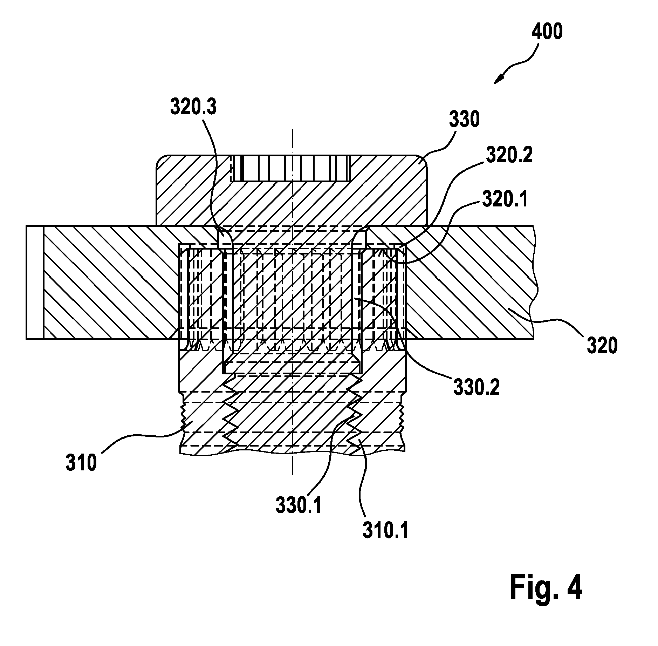

Fig. 4 zeigt einen Längsschnitt 400 durch den erfindungsgemäßen Scheibenwischerantrieb 300 von Fig. 3. Es wird deutlich, auf welche Weise auf der Abtriebswelle 310 die Kurbeleinrichtung 320 mittels der Flachkopfschraube 330 angebracht ist. Die Motorwelle 310 weist ein koaxiales Innengewinde 310.1 auf, in welches ein Außengewinde 330.1 der Flachkopfschraube 330 eingreift. Außerdem trägt die Motorwelle 310 ein Zylinderrändel 310.2. Das Zylinderrändel 310.2 steht in radialer Richtung der Abtriebswelle 310 in Reibschluss mit der Kurbeleinrichtung 320. In der dargestellten Ausführungsform weist die Kurbeleinrichtung 320 im Bereich des Zylinderrändels 310.2 eine unstrukturierte Oberfläche auf, ist also nicht gerändelt. In alternativen Ausführungsformen kann die Kurbeleinrichtung 320 eine korrespondierende Rändelung entlang der radialen Kontaktfläche mit der Abtriebswelle 310 tragen, um eine Drehmomentübertragung zu verbessern. In einer weiteren Ausführungsform ist es auch möglich, an Stelle einer Rändelung eine Verzahnung oder Profilierung auf einem oder beiden Elementen vorzusehen, beispielsweise ein Vielkeilprofil, eine Torx-Verbindung, eine Verzahnung oder ein beliebiges Polygonprofil.

Eine Stirnfläche der Abtriebswelle 310 wirkt mit einer Bodenfläche 320.1 der Kurbeleinrichtung 320 zusammen, um eine axiale Position der Kurbeleinrichtung 320 auf der Abtriebswelle 310 zu definieren. Gleichzeitig kann diese Kontaktfläche einen Teil eines Drehmoments zwischen der Kurbeleinrichtung 320 und der Abtriebswelle 310 übertragen.

Eine umlaufende Vertiefung 320.2 in der Kurbeleinrichtung 320 dient als Spanraum. Wird während eines Aufziehens bzw. Aufpressens der Kurbeleinrichtung 320 auf die Abtriebswelle 310 ein Span von der Kurbeleinrichtung 320 oder der Abtriebswelle 310 abgelöst, beispielsweise vom Zylinderrändel 310.2, so kann der Spanraum 320.2 dazu dienen, diesen Span aufzunehmen, um ihn davon abzuhalten, sich an die stirnseitige Bodenfläche 320.1 der Abtriebswelle 310 zu legen. Auf diese Weise kann durch das Zylinderrändel 310.1 eine kraft- und drehmomentschlüssige Verbindung zwischen der Kurbeleinrichtung 320 und der Abtriebswelle 310 sicher gestellt werden, während gleichzeitig ein korrekter Sitz der Kurbeleinrichtung 320 auf der Abtriebswelle 310 sicher gestellt ist.

Die Flachkopfschraube 330 weist zwischen einem Kopf und einem Außengewinde 330.1 einen Halsabschnitt 330.2 auf, der einen geringeren Durchmesser als das Außengewinde 330.1 besitzt. Wird die Flachkopfschraube 330 angezogen, so dehnt sich der Halsabschnitt 330.2 und wirkt als Axialfeder. Dadurch wird eine Vorspannung zwischen dem Kopf der Flachkopfschraube und dem Gewinde 330.1 bewirkt, das einem Lösen der Flachkopfschraube 330, etwa durch betriebsbedingte Beanspruchungen oder extern eingeleitete Vibrationen, entgegen gewirkt wird. Der in Fig. 4 zwischen dem Gewinde 330.2 und dem Halsabschnitt 330.1 angedeutete Absatz ist darstellungsbedingt und stützt die Flachkopfschraube 330 nicht gegen einen oberen Rand des Innengewindes 310 der Abtriebswelle ab.

Ein Durchgangsloch 320.3 der Kurbeleinrichtung 320 ist so dimensioniert, dass die Flachkopfschraube 330 im Bereich des Durchgangslochs 320.3 ein radiales Spiel aufweist.

Durch den erfindungsgemäßen Scheibenwischerantrieb ist es möglich, eine kraft- und drehmomentschlüssige Verbindung zwischen der Kurbeleinrichtung 320 und der Abtriebswelle 310 herzustellen, die so flach ist, dass auf einen axialen Ver satz eines auf der Kurbeleinrichtung 320 montierten Schubstangengelenks unter Umständen verzichtet werden kann. Der Kraft- bzw. Drehmomentschluss zwischen der Kurbeleinrichtung 320 und der Abtriebswelle 310 kann dabei durch ein leicht herzustellendes Rändel an einem oder beiden Elementen sicher gestellt werden, wobei ein Spanraum (Vertiefung 320.2) eine korrekte Ausrichtung der Kurbeleinrichtung 320 bezüglich der Abtriebswelle 310 sicher stellt.

## Patentansprüche

1. Scheibenwischerantrieb (300) für ein Fahrzeug, insbesondere ein Kraftfahrzeug, mit einer von einer Abtriebswelle (310) eines elektrischen Motors antreibbaren Kurbeleinrichtung (320), wobei
- eine Ausnehmung in der Kurbeleinrichtung (320) einen Endabschnitt der Abtriebswelle (310) aufnimmt;
- eine Axialposition der Kurbeleinrichtung (320) auf der Abtriebswelle (310) durch einen die Ausnehmung begrenzenden Absatz definiert ist;
- die Abtriebswelle (310) und/oder die Kurbeleinrichtung (320) im Bereich eines gegenseitigen Eingriffs mittels eines Rändels strukturiert ist,
**dadurch gekennzeichnet, dass**
- die Kurbeleinrichtung (320) im Bereich des Absatzes einen Spanraum (320.2). zur Aufnahme eines während eines Aufziehens bzw. Aufpressens der Kurbeleinrichtung (320) auf die Abtriebswelle (310) abgeschälten Spans aufweist,
- wobei der Spanraum eine entlang einer Wandung der Ausnehmung umlaufende axiale Vertiefung (320.2) umfasst.

2. Scheibenwischerantrieb nach Anspruch 1, wobei die Ausnehmung ein Sackloch umfasst, und der Boden des Sackloches im Wesentlichen eben ist, um mit einem stumpfen Ende der Abtriebswelle (310) zusammenzuwirken.

3. Scheibenwischerantrieb nach einem der vorangehenden Ansprüche, wobei die Kurbeleinrichtung (320) im Bereich des Absatzes ein Durchgangsloch (320.3) zur Aufnahme eines Befestigungsmittels (330) der Kurbeleinrichtung (320) an der Abtriebswelle (310) aufweist.

4. Scheibenwischerantrieb nach Anspruch 3, wobei die Abtriebswelle (310) ein koaxiales, mit einem Gewinde (310.1) versehenes Loch aufweist, das mit dem Durchgangsloch (320.3) in der Kurbeleinrichtung (320) korrespondiert.

5. Scheibenwischereinrichtung für ein Fahrzeug, insbesondere ein Kraftfahrzeug, mit einem Scheibenwischerantrieb (100) nach einem der Ansprüche 1 bis 4.

## Claims

1. Windshield wiper drive (300) for a vehicle, in particular a motor vehicle, with a crank device (320) which can be driven by an output shaft (310) of an electric motor, wherein
- a recess in the crank device (320) receives an end section of the output shaft (310);
- an axial position of the crank device (320) on the output shaft (310) is defined by a shoulder bounding the recess;
- the output shaft (310) and/or the crank device (320) are/is structured in the region of mutual engagement by means of knurling,
**characterized in that**
- in the region of the shoulder, the crank device (320) has a chip space (320.2) for receiving a chip peeled off during pulling or pressing the crank device (320) onto the output shaft (310),
- wherein the chip space comprises an axial depression (320.2) encircling along a wall of the recess.

2. Windshield wiper drive according to Claim 1, wherein the recess comprises a blind hole, and the floor of the blind hole is substantially planar in order to interact with a blunt end of the output shaft (310).

3. Windshield wiper drive according to one of the preceding claims, wherein, in the region of the shoulder, the crank device (320) has a passage hole (320.3) for receiving a fastening means (330) fastening the crank device (320) to the output shaft (310).

4. Windshield wiper drive according to Claim 3, wherein the output shaft (310) has a coaxial hole which is provided with a thread (310.1) and which corresponds to the passage hole (320.3) in the crank device (320).

5. Windshield wiper device for a vehicle, in particular a motor vehicle, with a windshield wiper drive (100) according to one of Claims 1 to 4.

## Revendications

1. Entraînement d'essuie-glace (300) pour un véhicule, en particulier un véhicule automobile, comprenant un dispositif de manivelle (320) pouvant être entraîné par un arbre de prise de force (310) d'un moteur électrique,
- un évidement dans le dispositif de manivelle (320) recevant une portion d'extrémité de l'arbre de prise de force (310) ;
- une position axiale du dispositif de manivelle (320) sur l'arbre de prise de force (310) étant définie par un épaulement limitant l'évidement
- l'arbre de prise de force (310) et/ou le dispositif de manivelle (320) étant structuré(s) dans la région d'un engagement mutuel au moyen d'un moletage,
**caractérisé en ce que**
- le dispositif de manivelle (320) présente, dans la région de l'épaulement, un espace de réception de morceaux (320.2) pour recevoir un morceau pelé pendant un vissage ou un pressage du dispositif de manivelle (320) sur l'arbre de prise de force (310),
- l'espace de réception de morceaux comprenant un renfoncement axial (320.2) périphérique entourant une paroi de l'évidement.

2. Entraînement d'essuie-glace selon la revendication 1, dans lequel l'évidement comprend un trou borgne, et le fond du trou borgne est essentiellement plat, afin de coopérer avec une extrémité franche de l'arbre de prise de force (310).

3. Entraînement d'essuie-glace selon l'une quelconque des revendications précédentes, dans lequel le dispositif de manivelle (320) présente, dans la région de l'épaulement, un trou traversant (320.3) pour recevoir un moyen de fixation (330) du dispositif de manivelle (320) au niveau de l'arbre de prise de force (310).

4. Entraînement d'essuie-glace selon la revendication 3, dans lequel l'arbre de prise de force (310) présente un trou coaxial pourvu d'un filetage (310.1) qui correspond au trou traversant (320.3) dans le dispositif de manivelle (320).

5. Dispositif d'essuie-glace pour un véhicule, en particulier pour un véhicule automobile, comprenant un entraînement d'essuie-glace (100) selon l'une quelconque des revendications 1 à 4.
